# EUROPEAN PATENT APPLICATION

(11) **EP 4 759 946 A1**
(43) Date of publication of application: **17.06.2026**
(21) Application number: 24768901.1
(22) Date of filing: 07.08.2024
(51) Int. Cl.: C22B 3/02, C01F 7/306, C22B 3/10, C22B 7/00, C22B 21/00, C22B 34/12, C22B 3/30, C22B 3/38

(54) **PROCESS FOR RECOVERING MATERIAL DERIVED FROM BAUXITE RESIDUE AND MATERIAL DERIVED FROM BAUXITE RESIDUE**

(30) Priority: 08.08.2023 BR 102023015953
(71) Applicant: New Wave Royalties Sociedad Anonima, 1294 Montevideo (UY)
(72) Inventor: ARANTES ARAÚJO, Lucas, 22290-160 Rio de Janeiro -RJ (BR); GOBBO, Luiz Antonio, 71745-003 Brasília - DF (BR); CAMELLO DO NASCIMENTO, Guilherme Henrique, 22250-040 Rio de Janeiro - RJ (BR)
(74) Representative: Michalski Hüttermann & Partner mbB
(86) International application number: PCT/BR2024/050347
(87) International publication number: WO 2025/030229

(57) **Abstract**

The present invention refers to a technical, economically viable process for recovering the relevant metallic and non-metallic contents of mining residues, in particular, bauxite residue, using it in full. Said process uses microwave energy, hydrochloric acid-assisted leaching, solvent extraction and a logical sequencing of steps so that it is possible to remove bauxite residue components with technical and economic viability, particularly that from the Bayer process.

## Description

The present invention refers to an economically viable process for recovering the relevant metallic and non-metallic contents of bauxite residue, using it in full. Said process uses microwave energy, hydrochloric acid-assisted leaching, solvent extraction and a logical sequencing of steps so that it is possible to remove bauxite residue components with technical and economic viability, particularly that from the Bayer process.

### Description of the state of the art

In the technological scope of products derived from mining processes, one of the best-known processes used by the mining industry to extract alumina from bauxite ore is the Bayer process.

The Bayer process was developed in 1888 and is the most used in the world for the production of alumina. The same consists of digesting bauxite under a temperature and pressure using sodium hydroxide as a leaching agent. The digestion process causes the aluminum present in bauxite in the form of gibbsite, boehmite and diaspore to react with sodium hydroxide to form the soluble compound sodium aluminate. Then, such sodium aluminate-rich liquor can be separated from the Bayer process residue through thickening and decantation. The liquor then follows to a crystallization stage to recover alumina and the material from the decanters ceases to be a residue and becomes a waste from the Bayer process, which is deposited into deposition ponds or dry stacking with compaction.

This waste resulting from the Bayer process (known as "Red Mud") is mainly composed of iron contents in the form of hematite and goethite, aluminum in the form of gibbsite and Bayer sodalite, titanium in the form of anatase and some minor elements such as scandium, uranium, thorium, zirconium, among others. This waste from the Bayer process is insoluble in the digestion stage, and is the result of precipitation of kaolinite in the form of Bayer Sodalite and insoluble iron and titanium oxides and hydroxides. However, sodalite, in addition to containing aluminum, contains iron, sodium and hydroxide, as well as a range of strategic metals of industrial interest, such as zirconium, scandium and titanium.

The fact is that such bauxite waste generated in the processing of alumina through the Bayer process is highly polluting: it is reactive and corrosive due to its high pH; it contains heavy metals, mainly uranium and thorium; it is thin and light, and must be constantly monitored, irrigated and compacted; and for the disposal of waste it is necessary to waterproof the soil to avoid percolating contamination. Therefore, it involves high maintenance costs, complex processing, is highly harmful to the environment and can result in environmental catastrophes such as those seen at the Ajka plant in Hungary.

That being said, the state of the art seeks to offer solutions for the treatment of products and residues previously considered waste to later obtain materials of interest, including the processing of bauxite waste.

Conceptually, most of the solutions for treating mining products and recovering materials of interest include the conversion or processing of the product or residue to allow its subsequent separation, thus allowing the extraction from that product or residue that which is of interest. In the instance of bauxite, iron, alumina, titanium and silica residue, mainly.

Conversion of the product or residue conventionally uses the application of heat to promote the phase change of the elements present therein and enable their separation and use. Such heat usually comes from the burning of coal, which is also usually used as a reducing agent in conversion processes.

In this context, the state of the art proposes solutions based on the use of microwave to supply energy and consequently heat products and residues. In theory, the need to burn coal to generate the heat required for conversion would then be eliminated and only the reducing agent would be used in conversion and reduction, making it possible to operate close to stoichiometry and, therefore, efficiently benefit from obtaining of the products of interest, iron, alumina, silica, titanium, mainly reducing their concentrations in the residue.

However, the state of the art proposes solutions for obtaining other materials of interest from residue from bauxite processing (particularly residue from the Bayer process) in addition to iron and alumina products. Mention can be made, for example, of silicon dioxide and titanium dioxide.

Examples of the state of the art that explore the use of microwave for heating mining products as well as the use of multiple other materials from bauxite of interest that until recently were considered waste are found in document BR102020026102-9.

The aforementioned document proposes solutions based on the use of microwave to supply energy as well as logical steps using sulfuric acid and sodium hydroxide in leaching to obtain silicon dioxide and titanium dioxide as a residue from the bauxite processing, in addition to evaporation and calcination steps to obtain the products of interest iron and alumina.

However, although the aforementioned process meets the purpose of technical and economic feasibility of recovering components from bauxite residue, the use of sulfuric acid in the process of recovering components from bauxite residue brings some challenges to be overcome.

Sulfuric acid has low selectivity for leaching in this type of process, and its vapor pressure is relatively low, which makes its regeneration difficult and requires neutralization and subsequent treatment for disposal.

Therefore, a first problem with the state of the art is the use of sulfuric acid in the process of recovering bauxite residue components, generating a residue that is invariably discarded into the environment.

Furthermore, a second problem also emerges from the state of the art, which is related to the multiple steps necessary to obtain the materials of interest when using sulfuric acid in the process of recovering components from bauxite residue.

The solutions described in patent application BR102020026102-9 result in a process where, after the leaching step with sulfuric acid, steps of decanting and filtering the leached liquor are necessary to extract silica, followed by the steps of hydrolyzing, precipitating, filtering and drying the silica-free leached liquor to extract titanium dioxide and finally proceed to the evaporation and calcination steps of the silica- and titanium dioxide-free leached liquor to obtain alumina.

In this sense, it is desirable that the number of steps to obtain alumina after leaching be reduced.

Thus, the purpose of the present invention is to make it possible to obtain multiple materials of interest from bauxite residue through logical and sequential steps using microwave irradiation, hydrochloric acid assisted leaching, solvent extraction and pyrohydrolysis, so as to solve some of the challenges of the prior art related to the generation of sulfuric acid residue and the need for multiple steps to extract alumina after leaching.

### Objects of the Invention

In view of the aforementioned prior art problems, a first goal of the present invention is to provide an improved process for the recovery of bauxite residue derivatives using a logical and particular sequence of microwave irradiation steps as a source of energy, hydrochloric acid leaching assisted, solvent extraction and pyrohydrolysis to allow particularly efficient extraction of the elements of interest from the residue.

A second goal of the present invention is to provide an improved recovery process for bauxite residue derivatives in which it is possible to regenerate the acid and solvents using them as a circulating charge in the process.

A third goal of the present invention is to provide an improved recovery process for bauxite residue derivatives with regard to the steps of purification of the materials of interest and obtaining alumina.

### Brief Description of the Invention

The present invention relates to a process for recovering bauxite residue derived materials which comprises the steps of mixing bauxite residue with a reducing agent to obtain a residue mixture; heating the residue mixture with microwave irradiation to obtain a reduced bauxite residue; magnetically separating the reduced bauxite residue to obtain portions of magnetic and non-magnetic material; leaching the non-magnetic material portion with hydrochloric acid with microwave irradiation to obtain a leaching liquor; decanting and filtering said leaching liquor to obtain a filtered liquor; solvent extracting the filtered liquor to obtain a concentrated aluminum chloride liquor; and pyrohydrolyzing the concentrated aluminum chloride liquor to obtain alumina.

In a possible embodiment of the process for the recovery of bauxite residue derived materials as proposed herein, the heating step belongs to a carousel-type reduction cycle or rotary oven with microwave.

In a possible embodiment of the process for recovering bauxite residue derived material as proposed herein, the leaching step comprises obtaining a leaching liquor containing alumina chloride, iron chloride, sodium chloride, silica and titanium dioxide.

In a possible embodiment of the process for recovery of bauxite residue derived material as proposed herein, the decanting and filtering step comprises obtaining a filtered liquor containing alumina chloride, iron chloride, sodium chloride.

In a possible embodiment of the process for recovering bauxite residue derived material as proposed herein, the decanting and filtering step comprises obtaining portions of silica and sodium dioxide and/or a pulp of silica and sodium dioxide.

In a possible embodiment of the process for recovering bauxite residue derived material as proposed herein, a pulp of silica and titanium dioxide is obtained for the step of centrifuging to separate by density titanium dioxide and silicon dioxide.

In a possible embodiment of the process for recovery of bauxite residue derived material as proposed herein, the decanting and filtering step further comprises at least one washing and filtration step.

In a possible embodiment of the process for recovery of bauxite residue derived material as proposed herein, the solvent extraction step comprises obtaining a charged organic stream containing iron chloride and sodium chloride.

In a possible embodiment of the process for recovery of bauxite residue derived material as proposed herein, the solvent extraction step further comprises a pumping step to obtain a circulating charge stream of concentrated aluminum chloride liquor remnants.

In a possible embodiment of the process for recovery of bauxite residue derived material as proposed herein, the solvent extraction step further comprises at least one washing step and a desorption step with an acidic solution to obtain a discharged organic product.

In a possible embodiment of the process for recovery of bauxite residue derived material as proposed herein, the solvent extraction step further comprises two washing steps to obtain a circulating charge stream of concentrated aluminum chloride liquor remnants.

In a possible embodiment of the process for recovery of bauxite residue derived material as proposed herein, the solvent extraction step further comprises a step of washing the discharged organic product to obtain a recovered organic solvent.

In a possible embodiment of the process for recovery of bauxite residue derived material as proposed herein, the pyrohydrolysis step comprises reaction with an oxygen source stream at a certain temperature for the decomposition of aluminum chloride into alumina.

In a possible embodiment of the process for recovering bauxite residue derived material as proposed herein, the pyrohydrolyzing step further comprises a step of regenerating hydrochloric acid.

In a possible embodiment of the process for recovery of bauxite residue derived material as proposed herein, it comprises an exhaust system for capturing and washing gases from the leaching and solvent extraction stages.

In a possible embodiment of the process for recovery of bauxite residue derived material as proposed herein, it comprises a step of separating the bauxite residue by size.

The present invention also deals with a material derived from bauxite residue that is obtained by the process proposed above, wherein the bauxite residue derived material comprises at least one of alumina, titanium dioxide and silica gel.

In a possible embodiment, the bauxite residue derived material as proposed herein comprises at least one of alumina in a concentration of between 80 and 99% of aluminum, titanium dioxide in a concentration of between 60 and 99% and silica gel in a concentration of 60% to 90%.

### Brief Description of the Drawings

The present invention will now be described in more detail based on one embodiment shown in the drawings. The figures show:

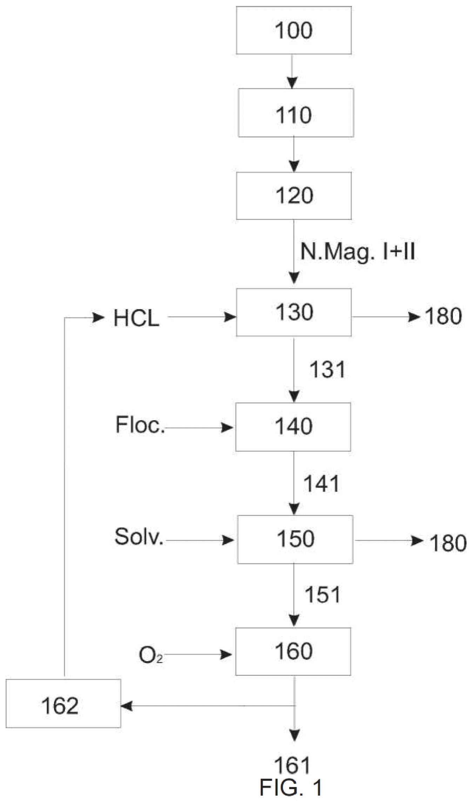

Figure 1 - is a flowchart of the process of recovering bauxite residue derived material that is the object of the present invention.

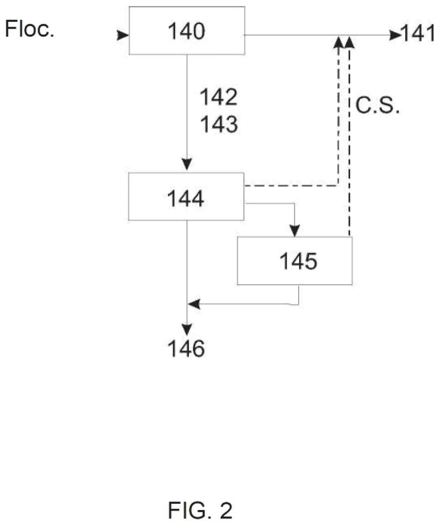

Figure 2 - is a flowchart of the recovery process of bauxite residue derived material in a preferred embodiment.

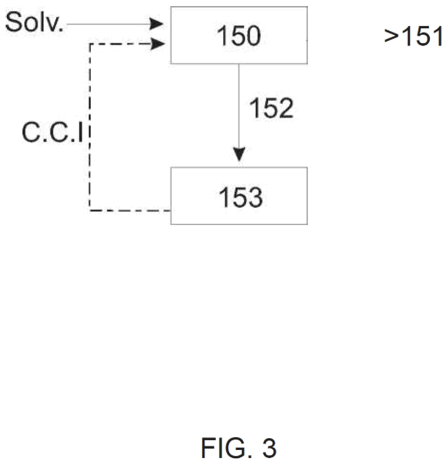

Figure 3 - is a flowchart of the recovery process of bauxite residue derived material in a preferred embodiment.

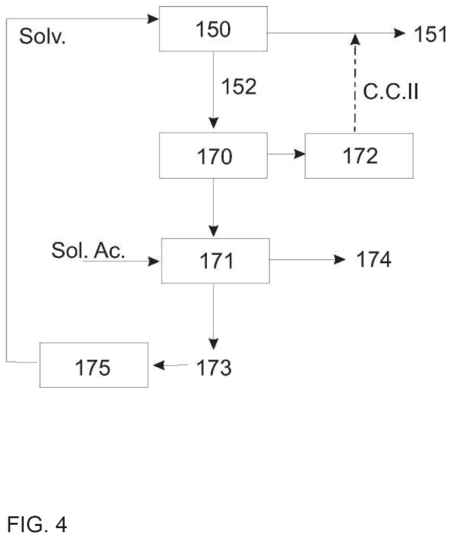

Figure 4 - is a flowchart of the recovery process of bauxite residue derived material in a preferred embodiment.
Figure 5 - is a graph showing the percentage of metallic iron versus the heating time and the amount of reducing agent used.
Figure 6 - is a graph showing the percentage of metallic iron versus the amount of calcium carbonate and the amount of reducing agent used.

### Detailed Description of the Figures

Firstly, it should be noted that the term "preferred" as used herein should not be understood as "imperative" or "mandatory". The term "preferred" aims to characterize a particularly efficient embodiment of the invention from among the multiple possible ones, the scope of the invention being limited only by its features that are absolutely essential for obtaining the proposed technical effects.

Furthermore, the term "bauxite residue" used throughout this description should be understood as the residue resulting from the processing of bauxite ore, particularly through the Bayer process, which classifies the aforementioned residue proposed here as a waste, composition of which comprises iron in the form of hematite and goethite, aluminum in the form of gibbsite and Bayer sodalite, titanium in the form of anatase, scandium, uranium, thorium and zirconium, which may or may not contain further additional elements.

Moveover, for a better understanding of the invention, the term "mesh" used herein (and denoted by the symbol "#") is used to define particle size ranges. It is known that the designation "mesh" as denoted here by a single number does not mean that each particle of the product or residue has exactly that size, but that the "mesh" size indicator represents the approximate average or mean size of the range of particles in that category.

Any percentage whose relationship is not explicitly described must be understood as a percentage by weight.

As will be detailed below, the inventors have identified that in the present invention it is advantageously possible to use hydrochloric acid, which allows the acid and solvent that are used in the steps of obtaining the multiple materials of interest to be regenerated, as well as enabling the steps of purification of alumina to take place in a simplified manner as compared to the solutions already proposed by the state of the art.

### RECOVERY PROCESS - BAUXITE RESIDUE

The process encompassed by the present invention is the process of recovering bauxite waste material, specifically the residue from the Bayer process.

Accordingly, the present invention proposes a process for recovering materials of interest from bauxite residue in an efficient manner by using microwave heating together with hydrochloric acid.

Generally speaking, the process of the present invention comprises the steps of mixing 100 bauxite residue with a reducing agent to obtain a residue mixture; heating 110 the residue mixture in a microwave reactor to obtain a reduced bauxite residue; magnetically separating 120 the reduced bauxite residue to obtain portions of magnetic material Mag.I+II and non-magnetic material N.Mag.I+II; leaching 130 the portion of non-magnetic material with hydrochloric acid and microwave irradiation to obtain a leaching liquor 131, decanting and filtering 140 said leaching liquor to obtaining a filtered liquor 141; solvent extracting 150 the filtered liquor to obtain a concentrated aluminum chloride liquor 151; and pyrohydrolyzing 160 the concentrated aluminum chloride liquor to obtain alumina 161. Below, a possible, but not mandatory, embodiment of the process is described, as an example, including optional steps.

### MIXING STEP 100

The mixing step 100 is intended to add a reducing agent to allow the subsequent conversion/reduction of certain materials of interest within the mining product, particularly the waste from the Bayer process (red mud), by heating thus obtaining what is designated herein as reduced bauxite residue. The reducing agent can be, for example, charcoal fines, however, various reducing agents can be used such as mineral coal fines, biomass, coke, among others, given the versatility of microwave reduction.

Preferably, the bauxite residue and the reducing agent are mixed in Ribbon Blender equipment. The mixture comprises from 95% to 70% bauxite residue and from 5% to 30% of a reducing agent. A carbothermal mixture is thus formed and goes on to the next unitary operation of the process, namely, the pelletizing step. Preferably, the mixture comprises from 10 to 20%, more preferably between 12 and 15%, of a reducing source.

### PELLETIZING STEP

The pelletizing step is optional, and it is possible to carry out the step of metallurgical reduction with the powder loose inside the microwave and/or equipment that receives microwave irradiation.

However, pelletizing aims to agglomerate fine particles, leaving them cohesive, preventing gases from dragging them and facilitating the diffusion of reducing gases into the pellet, such that the greater diffusivity resulting from pelletizing reduces the time required for the reaction, causing a faster conversion. Limestone, bentonite and sodium silicate are preferably used as binding agents.

If pelletizing is carried out, the inclination and rotation of the equipment must be parameterized based on the characteristics of the bauxite residue, such as humidity, and also parameterized by the size of the pellet. The bauxite residue moisture content is from 10 to 40% moisture, preferably between 20 and 30%, more preferably between 22 and 28% moisture to promote agglomeration of particles forming the pellet and the pellets are 10mm to 16mm in size. The carbothermal mixture pellets go to the next unit operation, namely heating 110.

### HEATING STEP 110

In the heating step 110 by microwave irradiation, the reaction takes place in a reactor with a microwave generating source of 100kW power, being irradiated between 10kW.h and 100kW.h energy per ton of carbothermic mixture, preferably between 20kW.h and 60kW.h per ton of carbothermic mixture. The microwave reactor used for the heating step described above can be, for example, the reactor proposed in document BR102020026102-9.

In this sense, the carbothermal mixture pellets receive microwave irradiation to form reduced bauxite residue. Heating takes place over a residence time of between 5 and 30 minutes, preferably between 10 and 20 minutes, more preferably between 12 and 16 minutes.

It is noteworthy that the effects of using a microwave reactor to convert and heat the mining product of interest are extremely beneficial. Faster, more efficient heating is achieved, with prior separation of materials due to the uneven vibration of the contents that make up the bauxite residue and, not least, without the need to burn polluting fuels such as coal for heating, which is added only for the purpose of generating reducing gases. Using a microwave reactor enables the use of stoichiometric amounts of reducing agent. Additionally, it is worth noting that such benefits can also be observed for all processes of the present invention described here that use a microwave reactor to reduce/convert the mining product.

In this sense, the use of microwaves to heat mining products brings multiple advantages and positive effects to the process. Firstly, the microwave transfers energy, not heat, so heating and phase transformation take place more efficiently. Furthermore, electromagnetic waves in the microwave spectrum cause a change in the structure of the molecule; rotation of the electric and magnetic dipoles changes the crystalline structure of the ores that pass through the microwave, making them more reactive, thus facilitating processing. Therefore, pretreating ore with microwave provides for metal recovery with less reagent consumption.

In this sense, surprisingly and advantageously, the use of microwave in the heating step allows the transformation of iron present in the red mud into the magnetic phases such as magnetite and metallic iron to occur at a relatively low temperature. This is possible because, under microwave irradiation, the Bourdouard reaction equilibrium is shifted and occurs at low temperatures. Further explanation on this equilibrium shift can be found in the article "Microwave-Specific Enhancement of the Carbon-Carbon Dioxide (Boudouard) Reaction" by Hunt et al (J. Phys. Chem. C 2013, 117, 51, 26871-26880, October 30, 2013, https://doi.org/10.1021/jp4076965).

More specifically, it is noted that the equilibrium of the Bourdouard reaction using microwave is reached at around 200°C, that is, at a much lower temperature than that required to reach equilibrium in conventional thermal processes, which is around 707°C. Advantageously, it causes the reactor to have a greater concentration of CO than that of CO2 and, then, there is a reducing environment at low temperatures, allowing direct reduction with a unique characteristic.

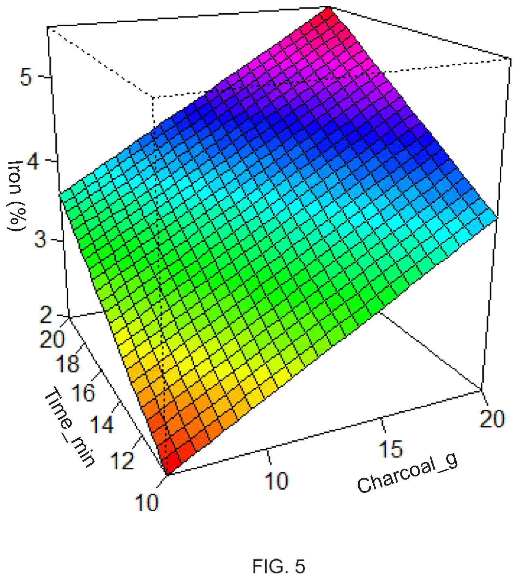

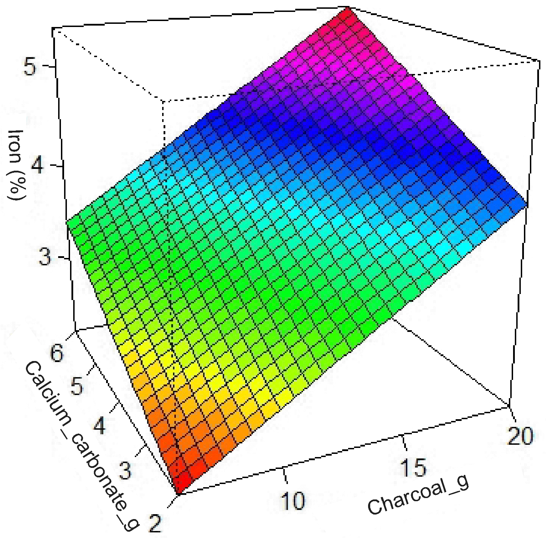

The magnetic phases produced from this process can be obtained through different sources of reducing agents, which is made possible by microwave catalysis. In other words, regardless of the type of reducer used (mineral coal, charcoal, coke, sawdust and mixtures thereof), conversion to magnetite remains high, showing the versatility of microwave reduction. It is also observed that the metallic iron generated in such direct reduction via microwave has the time and amount of reducer used as influential predictors, as can be seen in Figure 5. In figure 5, charcoal is used as a reducing agent as an example, although, as already explained, other types of reducers can be used. Using longer times and a greater amount of reducer, the amount of metallic iron produced in the sample is increased, as per the table below, which shows an analysis carried out on 9 residue samples via Rietveld refinement (charcoal and CaCO3 in grams/gram of mining product, namely, in this example, Red Mud):

| **Samples** | **Red Mud (g)** | **Charcoal (g/g)** | **CaCO3 (g/g)** | **Time (min.)** | **Hematite (%)** | **Magnetite (%)** | **Iron (%)** | **Wüstite (%)** |
|---|---|---|---|---|---|---|---|---|
| Sample 01 | 100 | 0.2 | 0.06 | 20 | 7.52 | 17.72 | 6.39 | 0 |
| Sample 02 | 100 | 0.2 | 0.02 | 20 | 6.28 | 18.68 | 4.82 | 0 |
| Sample 03 | 100 | 0.2 | 0.06 | 10 | 8.01 | 36.26 | 4.32 | 0 |
| Sample 04 | 100 | 0.06 | 0.06 | 20 | 4.7 | 21.97 | 6.48 | 0.64 |
| Sample 05 | 100 | 0.06 | 0.06 | 10 | 5.77 | 45.38 | 3.04 | 0.36 |
| Sample 06 | 100 | 0.06 | 0.02 | 10 | 2.5 | 51.09 | 2.14 | 0.25 |
| Sample 07 | 100 | 0.2 | 0.02 | 10 | 6.54 | 41.02 | 3.71 | 0 |
| Sample 08 | 100 | 0.06 | 0.02 | 20 | 6.02 | 26.71 | 2.86 | 0.22 |

| **Samples** | **Red Mud (g)** | **Charcoal (9/9)** | **CaCO3 (g/g)** | **Time (min.)** | **Hematite (%)** | **Magnetite (%)** | **Iron (%)** | **Wüstite (%)** |
|---|---|---|---|---|---|---|---|---|
| Sample 09 | 100 | 0.13 | 0.04 | 15 | 9.78 | 29.92 | 5.07 | 0 |

Preferably, the amount of reducer used ranges from 0.01 to 0.5 grams/gram of mining product (g/g), more preferably 0.20 to 0.40 g/g. Preferably, the amount of calcium carbonate used ranges from 0.01 to 0.1 gram/gram of mining product (g/g), more preferably 0.02 to 0.06 g/g.

Calcium carbonate (CaCO3), in addition to serving as a CO source (reducing gas) in the decomposition into CaO and CO, acts to agglomerate iron particles, reducing the viscosity of aluminates. It is also observed that the amount of calcium carbonate used positively favors the formation of metallic iron in the sample, as seen in Figure 6.

The metallic iron produced has a sponge iron specification. The table below presents the expected composition of iron produced in the process and is derived from a duplicate analysis in X-ray fluorescence (XRF), fraction +150µm. These analyses show the relevance of separating bauxite residue by size, since the analyzed fraction has a market specification, reducing the mass that will be sent to magnetic separation, as will be further detailed below.

| **Element** | **Measurement 01** | **Measurement 02** | **Average** |
|---|---|---|---|
| **Metallic Fe (%)** | 95.470 | 95.438 | 95.454 |
| **Al (%)** | 1.719 | 1.747 | 1.733 |
| **Si (%)** | 1.303 | 1.263 | 1.283 |
| **Ca (%)** | 0.114 | 0.113 | 0.114 |
| **Cl (%)** | 0.021 | 0.023 | 0.022 |
| **Co (%)** | 0.442 | 0.440 | 0.441 |
| **Cr (%)** | 0.074 | 0.074 | 0.074 |
| **Cu (%)** | 0.016 | 0.016 | 0.016 |
| **Ga (%)** | 0.023 | 0.023 | 0.023 |
| **K (%)** | 0.027 | 0.019 | 0.023 |
| **Mn (%)** | 0.083 | 0.065 | 0.074 |
| **Mo (%)** | 0.003 | 0.003 | 0.003 |
| **Nb (%)** | 0.006 | 0.006 | 0.006 |
| **Ni (%)** | 0.025 | 0.005 | 0.015 |
| **P (%)** | 0.085 | 0.083 | 0.084 |
| **S (%)** | 0.085 | 0.089 | 0.087 |
| **Pb (%)** | 0.012 | 0.012 | 0.012 |
| **Sb (%)** | 0.004 | 0.004 | 0.004 |
| **Sn (%)** | 0.008 | 0.010 | 0.009 |
| **Ti (%)** | 0.339 | 0.346 | 0.343 |
| **V (%)** | 0.069 | 0.068 | 0.069 |
| **Yb (%)** | 0.000 | 0.042 | 0.021 |
| **Zn (%)** | 0.004 | 0.002 | 0.003 |
| **Zr (%)** | 0.043 | 0.043 | 0.043 |

Processing of red mud by microwave provides numerous advantages compared to other forms of reduction and heating, such as blast furnaces, among others. This is because heating via electromagnetic waves provided by microwave equipment transfers energy, not heat, causing heating from the inside out in a microscopic manner. The electromagnetic wave changes the rotation states of atoms, causing them to vibrate and rotate, increasing the average kinetic energy and, consequently, the temperature. Furthermore, the atomic structure of the compounds present in the residue changes, for example, sodalite transforms into nepheline, anatase into amorphous or rutile, among others.

Such an interaction with the electromagnetic wave occurs unevenly in materials present in this residue, with the real and imaginary dielectric constant being the property that controls intensity of this interaction. Materials such as magnetite have high dielectric constants and, therefore, more interaction with the electromagnetic wave, dissipating more energy. This unequal interaction will uniquely promote, in addition to the reduction of iron phases, the release of minerals, thus facilitating their separation and increasing reactivity.

For example, titanium in the form of anatase is a very inert material. When irradiated by microwave, vibration renders it amorphous, and this causes the material to react with mineral acids, thus enabling its solubilization and subsequent recovery, as seen later herein.

By way of clarification of what happens during the heating of the mining product in the process of the present invention, it is explained that hematite and goethite, phases present in bauxite residue, are rapidly converted by microwave energy and the CO produced by the reaction of reducing agent through the Bourdouard reaction catalyzed by microwave. As a result, the magnetic phases of iron, metallic iron and magnetite, grow over the minutes. Other materials present in the residue, such as Sodalite, also undergo conversion.

Then in a possible embodiment, the bauxite residue reduced at high temperature is subjected to two crushing stages, the first crushing step results in an increased surface area of the reduced residue in order to accelerate its cooling; and the second crushing step adjusts the size of the reduced residue for the next unit operation, namely grinding.

Preferably, in the second crushing step the reduced bauxite residue reaches a particle size of 20 mm, which is suitable for grinding.

In a possible embodiment, the heating step 110 belongs to a reduction cycle, preferably of the carousel type, wherein the carbothermal mixture pellets are loaded/fed into a reducing pan, in which a reducing agent is added, followed by said step of heating to obtain the reduced bauxite residue and subsequent cooling and unloading. Another possible embodiment is to use rotary ovens adapted with microwave to carry out the reduction continuously.

In this embodiment, after unloading, the reduced bauxite residue follows to the two crushing steps, as previously described, to be suited to the grinding step.

### GRINDING STEP

The bauxite residue recovery process in question further comprises, in a possible embodiment, the step of carrying out at least one grinding iteration of the reduced bauxite residue.

More specifically, the instant process may involve at least one grinding iteration to disaggregate the magnetic phases of reduced bauxite residue to be concentrated by the magnetic separators. Grinding can be carried out, for example, by a bar or ball mill, preferably a ball mill.

### STEP OF SIZE SEPARATION

Subsequently to grinding, the instant process preferably comprises at least one step of performing a size separation of the reduced and ground bauxite residue to obtain a coarse portion Gr and a fine portion Fi of residue.

Thus, the grinding product is first separated by a highfrequency vibrating sieve equipment, so that a thick portion Gr follows to the magnetic coarse separation step and a fine portion Fi to the magnetic fines separation step.

Size separation reduces the mass that feeds the magnetic separator, hence increasing its capacity and efficiency, since an even particle size prevents larger particles from dragging smaller particles, reducing the effect of the magnetic field on the material to be separated.

Preferably, size separation can be carried out using highfrequency vibrating sieve equipment. Said sieve may comprise openings of grain sizes sequentially smaller with each sieving iteration, for example, sequential openings of 150 µm, 75 µm, 45 µm, etc. More preferably, size separation is carried out to obtain a first material having a grain size between 75 µm and 45 µm that configures a coarse portion Gr, and to obtain a second material having a grain size lower than 45 µm that configures a fines portion Fi, which will undergo a magnetic separation process, as explained below.

### MAGNETIC SEPARATION STEP 120 OF THE COARSE PORTION (Gr)

The step of magnetically separating the coarse portion comprises magnetically separating the coarse portion Gr into a magnetic portion Mag. I and a non-magnetic portion N.Mag.I through a set of magnetic separators arranged in separation stages.

Preferably the set is composed of three stages.

### MAGNETIC SEPARATION STEP 120 OF THE FINES PORTION (Fi)

The step of magnetically separating the fines portion comprises magnetically separating the fines portion Fi into a magnetic portion Mag. II and a non-magnetic portion N.Mag.II through a set of magnetic separators arranged in separation stages.

Preferably the set is composed of three stages.

Preferably, the fines residue portion Fi undergoes a second grinding iteration. In this sense, it is clarified that the fines portion Fi of the residue is aggregated with other minerals, unlike the coarse portion Gr which already contains reduced and released iron, and can be easily concentrated from a magnetic separation, as previously proposed and, therefore, additional grinding of the fines portion Fi is advantageous to release the magnetic particles and to allow subsequent magnetic separation.

After the separation steps, the magnetic portion is stored to be thereafter sold on the market and the non-magnetic portion proceeds to the leaching step.

However, the grinding, size separation, magnetic separation 120 steps described herein can be, for example, the steps proposed in document BR102020026102-9, as well as complemented by the steps proposed in document BR102020026102-9.

Then, regarding chemical processing, the process for recovering bauxite residue derivatives of the present invention comprises the steps detailed below.

### LEEACHING STEP 130

Leaching 130 is carried out by adding the non-magnetic N.Mag I + II portion to a leaching tank, with the addition of hydrochloric acid to the tank together with a microwave radiation generation source.

It is noteworthy that in the present invention, microwave irradiation vibrates each of the minerals with a certain frequency, which depends on the dielectric constant of each mineral.

This transfer of energy in the form of vibration causes a change in phase in the ore which, together with hydrochloric acid, advantageously facilitates the purification of the leaching liquor to obtain the materials of interest.

A leaching stream is therefore obtained, wherein alumina, iron and sodium react with hydrochloric acid, forming a leaching liquor 131 containing alumina chloride, iron chloride, sodium chloride, silica and titanium dioxide.

Leaching occurs with hydrochloric acid HCL in a ratio of 0.5mL/g to 5mL/g, preferably between 2 and 4mL/g, more preferably between 3.2 and 3.8mL/g for each gram of non-magnetic product. The final mixture is adjusted with water to comprise a solids percentage of from 5 to 50% solids, preferably between 10 and 40% solids, more preferably between 20 and 30% solids. The leaching and microwave-assisted reaction time is between 10 and 60 minutes, preferably between 20 and 50 minutes, more preferably between 35 and 45 minutes, maintaining the temperature between 30 and 120°C, preferably between 50 and 100°C, more preferably between 60 and 90°C, the leached material is separated by decantation and filtered.

Such leaching stream of leached liquor 131 is then decanted and filtered 140 to obtain a filtered liquor containing portions of silica and titanium dioxide.

### DECANTATION AND FILTRATION STEP 140

The decantation step 140 is intended to separate the leaching stream 131 into a liquor stream 141 containing alumina chloride, iron chloride and sodium chloride and, preferably, in a stream of 142 decanted portions of silica and sodium dioxide.

In this sense, at the exit of the leaching tank, the leaching stream 131 is directed to thickener-type equipment for liquid-solid phase separation. Preferably, flocculant is added. A non-exhaustive example of a flocculant to be used is the polymeric anionic flocculant SINOFLOC.

As a result, the liquor stream 141 containing alumina chloride, iron chloride and sodium chloride, which has a lower solids concentration compared to the thickener feed (overflow) proceeds to a solvent extraction step, which will be described later. Typical composition ranges of liquor 141 in this step can be seen in the following table:

| **Element** | **Composition range** |
|---|---|
| Na (g/L) | 10.5 to 40.5 |
| Al(g/L) | 3.5 to 20.5 |
| Fe (g/L) | 1.0 to 5.5 |
| Si (g/L) | <0.5 |
| Ca (g/L) | <0.5 |
| Ti (g/L) | <0.2 |
| V (g/L) | 0.0 to 0.1 |
| Cr (g/L) | <0.05 |
| Mn (g/L) | <0.05 |
| Ni (g/L) | <0.05 |
| Zn (g/L) | <0.05 |
| Sn (g/L) | <0.05 |
| Sb (g/L) | <0.05 |
| Te (g/L) | <0.05 |

The stream of decanted portions 142 of silica and sodium dioxide has a higher concentration of solids compared to the thickener feed (underflow). It should be noted that the thickening step is carried out because, although these portions 142 have a higher concentration of solids, the solids are fine. Thus, the thickening operation makes it possible to filter out silica and sodium dioxide fines.

In one embodiment, the decanted portions 142 of silica and sodium dioxide exit the thickener in the form of a pulp 143 containing silica and titanium dioxide.

The silica and titanium dioxide pulp 143 then goes through a filtering and washing step 144 to form a cake 146 concentrated in silica gel and titanium dioxide. Preferably, the pulp is composed of values (in mass/volume - m/v) between 30 and 90% m/v silica, 18% m/v titanium and 2% m/v unreacted impurities.

That is, said silica and titanium dioxide pulp 143 goes through at least one countercurrent washing and filtering step 144 prior to the formation of the cake concentrated in silica gel and titanium dioxide.

It is noteworthy that washing and filtering 144 in countercurrent advantageously provides redirection of the solubilized content (S.C.) of alumina chloride, iron chloride and sodium chloride present in the silica and titanium dioxide pulp 143 to the liquor stream 141 that will then proceed to the solvent extraction step.

In one possible embodiment, at least one more washing and filtering step 145 in countercurrent to the first washing and filtering 144 step, as described above, is performed. This becomes advantageous because as the pulp is washed, less acid is retained in the cake and more solubilized content (C.S.) goes to the liquor 141; therefore, the additional washing 145 causes the silica and titanium products to become purer and more alumina is recovered in the liquor.

Obtaining the cake 146 enables the separation of titanium dioxide from the silica by density, the operation being carried out using a tricanter-type centrifuge.

Thus, the process of recovering bauxite residue derivatives of the present invention, which uses hydrochloric acid in leaching, makes it possible to obtain materials of interest such as silica and titanium dioxide from a single decanted stream that will be washed and filtered.

In this context, the inventors emphasize that the solutions proposed for the processing of Bayer process as a bauxite residue, such as the solutions described in patent application BR102020026102-9, which make use of leaching with sulfuric acid, result in multiple streams /steps to obtain silica and titanium dioxide.

In patent application BR102020026102-9, silica is inert to sulfuric acid and remains in a solid state during leaching, and the leaching stream needs to go through a first step to decant and filter the leached liquor to extract silica in the form of amorphous silica.

Thereafter, the filtered and decanted leached liquor has to go through a second step to extract titanium dioxide, where it is necessary to hydrolyze, precipitate, filter and dry the liquor from a titanium dioxide seed and adjust the solution pH in order to force precipitation of titanium dioxide.

Only after these steps is it possible to proceed with the extraction of alumina.

In other words, the solutions described in patent application BR102020026102-9 result in a process where after the leaching step with sulfuric acid, steps of decanting and filtering the leached liquor are necessary to extract silica, followed by the steps of hydrolyzing, precipitating, filtering and drying the silica-free leached liquor to extract titanium dioxide and, finally, proceed to obtain alumina.

In contrast, in the present invention, after the leaching step 130, silica and titanium dioxide are separated 142 at the same time from the leached liquor 141 by means of decantation and filtration 140, and the decanted and filtered leached liquor 141 can proceed to obtaining alumina.

Particularly advantageously, leaching with hydrochloric acid as proposed by the present invention makes it possible to purify the elements of interest from the bauxite residue in a simplified manner compared to the prior art.

In other words, leaching with hydrochloric acid as now proposed by the present invention is more efficient because hydrochloric acid provides greater metal recoveries. Furthermore, it is more efficient in economic and environmental aspects, as this acid will be regenerated at the end of the process.

In other words, enabling the use of hydrochloric acid in the processing of bauxite residue according to the present invention advantageously minimizes the process steps/streams for obtaining materials of interest compared to prior art processes.

### STEP OF SOLVENT EXTRACTION 150

Then, a solvent extraction step 150 is carried out.

After the step of decantation and filtration 140, the liquor 141 free of silica and titanium dioxide and containing alumina chloride, iron chloride and sodium chloride is directed to an extraction column, being fed to the top of the extraction column so as to contact an organic solvent.

In this sense, along the extraction column iron chloride and sodium chloride present in the filtered liquor 141 interact with the organic solvent and are carried thereby, resulting in two streams, the first stream 151 being a concentrated aluminum chloride liquor stream and the second stream 152 being a stream containing iron chloride, sodium chloride and organic solvent, as seen in the following table.

| **Element** | **First stream** | **Second stream** |
|---|---|---|
| Na (g/L) | <0.5 | 10.5 to 40.5 |
| Al(g/L) | 3 to 20 | <0.5 |
| Fe (g/L) | <0.5 | 1.2 to 5.3 |
| Si (g/L) | <0.5 | <0.5 |
| Ca (g/L) | <0.5 | <0.5 |
| Ti (g/L) | <0.2 | <0.2 |
| V (g/L) | 0.0 to 0.1 | 0.0 to 0.1 |
| Cr (g/L) | <0.05 | <0.05 |
| Mn (g/L) | <0.05 | <0.05 |
| Ni (g/L) | <0.05 | <0.05 |
| Zn (g/L) | <0.05 | <0.05 |
| Sn (g/L) | <0.05 | <0.05 |
| Sb (g/L) | <0.05 | <0.05 |
| Te (g/L) | <0.05 | <0.05 |

The first stream 151 containing concentrated aluminum chloride liquor is conveyed to a concentrated aluminum chloride liquor tank for the subsequent pyrohydrolysis step 160 that will be described later.

The second stream 152 containing iron chloride and sodium chloride is, preferably, carried by the organic solvent and proceeds to a charged organic tank for the subsequent washing and desorption step. Said second charged organic stream 152 may also comprise remnants of aluminum chloride concentrate.

In this sense, the charged organic tank advantageously comprises pumping elements, such as an aluminum chloride concentrate recovery pump, so that the second stream 152 of charged organic passes through a pumping step 153.

Said elements function by redirecting the remaining aluminum chloride concentrate from the second stream 152 to the top of the solvent extraction column.

Thus, advantageously, a circulating charge C.C. of aluminum chloride concentrate remnants is created, enabling the purification of the elements of interest from the bauxite residue with significant efficiency.

That is, the part of the aluminum chloride concentrate eventually contained in the second loaded organic stream 152 returns to the solvent extraction step 150, at the top of the extraction column.

However, in this solvent extraction step 150, the extraction column is pulsating, which advantageously reduces the number of extraction stages once the process becomes *plug flow,* allowing multiple stages in a single column.

Furthermore, preferably, the solvent fed to the top of the extraction column is composed of organic compounds, for example, alkylphosphoric acids, diluted to a certain concentration in hydrocarbons, for example isoparaffin. A non-exhaustive and non-imperative practical example of a solvent is the following compound: 10% ionquest, 5% Acorga M5640 e 85% SehllSol D70.

### WASHING/DESORPTION STEP 170, 171

Preferably, the second organic stream 152 loaded with iron chloride and sodium chloride, which leaves the loaded organic tank goes to a washing 170 and desorption 171 step.

This washing step 170 has the function of not only washing the loaded organic so that it is directed to the desorption step 171, but also recovering any remaining aluminum chloride concentrate possibly still contained in the second stream 152 of organic solvent and directing them to a washing step 172 of aluminum chloride concentrate.

That is, any remnants of aluminum chloride concentrate that were not redirected in the pumping step 153 go through a washing step 172 to create a second recirculating load C.C.II which is directed to the concentrated aluminum chloride liquor tank together with the first stream 151.

Thus, advantageously, a second circulating charge C.C II of aluminum chloride concentrate remnants is created, enabling purification of the elements of interest from the bauxite residue of the process of the present invention with significant efficiency.

Subsequently, the loaded and washed organic solvent that passes through the washing step 170 leaves the loaded organic washing tank and is directed to an inverted-type desorption column containing an acidic hydrochloric acid solution for the desorption step 171 to take place.

In the desorption step 171, the washed charged organic interacts with the acidic hydrochloric acid solution so as to result in a first stream of discharged organic 173 and a second stream of charged organic 174 of iron and sodium, this second stream 174 being preferably discarded from the process.

The first discharged organic stream 173 may, optionally, go through a washing step 175 in a discharged organic washing tank to recover the organic solvent.

Thus, the discharged and cleaned organic solvent advantageously becomes viable for redirection to the solvent extraction column, returning to the process of the present invention as a circulating charge.

In this context, the inventors emphasize that the use of hydrochloric acid in the process of the present invention results in a solvent extraction step and a washing and desorption step that advantageously enable the efficient obtaining of two additional purification charges of aluminum chloride concentrate, in addition to the use of the solvent as a circulating charge.

### PYROHYDROLYSIS STEP 160

Then, in this step, the first stream of concentrated aluminum chloride liquor 151 from the solvent extraction step 150 and, optionally, the two additional purification charges of aluminum chloride concentrate C.C. I and C.C. II proceed to a pyrohydrolysis step 160 that is intended to decompose aluminum chloride into alumina 161.

To the concentrated aluminum chloride liquor 151 inside the pyrohydrolysis equipment is fed an oxygen source stream for the reaction at a certain temperature sufficient for decomposition of aluminum chloride to generate alumina 161 and regenerate hydrochloric acid. The temperature in the pyrohydrolysis equipment being from 400 to 1500°C, preferably between 500 and 1200°C, more preferably between 800 and 1000°C.

It is observed that the temperature ranges are sufficient for the decomposition of alumina chloride into alumina and hydrochloric acid in its gaseous form, that is, hydrogen chloride gas.

Said hydrogen chloride gas is directed to a washing step 162, in a gas washing equipment so as to obtain regenerated hydrochloric acid.

Thus, advantageously, the regenerated hydrochloric acid can feed the leaching stage 130 as a circulating charge, being even more efficient in economic and environmental aspects.

### EXHAUST SYSTEM 180

In a possible embodiment, the process of recovering bauxite residue derived material of the present invention further comprises an exhaust system 180 for capturing and washing gases from the leaching 130 and solvent extraction 150 steps. The captured gases are directed to gas washing equipment to obtain regenerated hydrochloric acid circulating in the process proposed herein, similarly to the equipment used in the washing step 162 after pyrohydrolysis 160.

In view of the above, the bauxite residue recovery process as proposed herein allows one to obtain multiple materials of interest through microwave heating and subsequent chemical processing steps with hydrochloric acid and solvent extraction, where it is possible to regenerate both the acid and the solvent as circulating charges, in addition to enabling the extraction of at least two materials of interest from a single stream with minimized steps when compared to solutions already proposed by the state of the art.

It is extremely important to highlight that the process proposed herein is shown to be advantageous over processes known in the prior art, at least for the following reasons:
(i) hydrochloric acid has a vapor pressure relatively higher than the vapor pressure of sulfuric acid, which is beneficial for the process proposed herein as it allows the facilitated regeneration of hydrochloric acid and its use in a cyclic manner;
(ii) hydrochloric acid also allows the cyclic use of solvents;
(iii) the use of solvents allows additional alumina purification charges, wherein the recovery of the entire content is through successive washings of the organic phase, generating an alumina-rich liquor concentrate; and
(iv) it allows purification of the elements of interest from the bauxite residue in a simplified manner compared to the state of the art.

Having described a preferred embodiment of the present invention, it should be understood that the scope of the present invention encompasses other possible variations, being limited only by the content of the appended claims, including any possible equivalents thereof.

## Claims

1. A process for recovering material derived from bauxite residue, the process being **characterized in that** it comprises the steps of:
- mixing (100) the bauxite residue with a reducing agent to obtain a residue mixture;
- heating (110) the residue mixture to obtain a reduced bauxite residue through microwave irradiation;
- magnetically separating (120) the reduced bauxite residue to obtain portions of magnetic (Mag.I + II) and non-magnetic (N.Magl + II) material;
- leaching (130) the portion of non-magnetic material (N.Magl + II) with hydrochloric acid with microwave irradiation to obtain a leaching liquor (131);
- decanting and filtering (140) said leaching liquor (131) to obtain a filtered liquor (141);
- solvent extracting (150) the filtered liquor (141) to obtain a concentrated aluminum chloride liquor (151); and
- pyrohydrolyzing (160) the concentrated aluminum chloride liquor (151) to obtain alumina (161).

2. The process for recovering material derived from bauxite residue, according to claim 1, **characterized in that** the leaching step (130) comprises obtaining a leaching liquor (131) containing alumina chloride, iron chloride, sodium chloride, silica and titanium dioxide.

3. The process for recovering material derived from bauxite residue, according to any one of claims 1 to 2, **characterized in that** the decanting and filtering step (140) comprises obtaining a filtered liquor (141) containing alumina chloride, iron chloride, sodium chloride.

4. The process for recovering bauxite residue derived material, according to any one of claims 1 to 3, **characterized in that** the decanting and filtering step (140) comprises obtaining portions (142) of silica and sodium dioxide and/or a slurry (143) of silica and sodium dioxide.

5. The process for recovering material derived from bauxite residue, according to any one of claims 1 to 4, **characterized in that** the decanting and filtering step (140) further comprises at least one washing and filtration step (144, 145).

6. The process for recovering material derived from bauxite residue, according to any one of claims 1 to 5, **characterized in that** the solvent extraction step (150) comprises obtaining a charged organic stream (152) containing iron chloride and sodium chloride.

7. The process for recovering material derived from bauxite residue, according to any one of claims 1 to 6, **characterized in that** the solvent extraction step (150) further comprises a pumping step (153) to obtain a circulating charge stream of remnants of concentrated aluminum chloride liquor (C.C. I).

8. The process for recovering material derived from bauxite residue, according to any one of claims 1 to 7, **characterized in that** the solvent extraction step (150) further comprises at least one washing step (170) and a desorption step (171) with an acidic solution to obtain a discharged organic product (173).

9. The process for recovering material derived from bauxite residue, according to any one of claims 1 to 8, **characterized in that** the solvent extraction step (150) further comprises two washing steps (170, 172) to obtain a circulating charge stream of remnants of concentrated aluminum chloride liquor (C.C. II).

10. The process for recovering material derived from bauxite residue, according to any one of claims 1 to 9, **characterized in that** the solvent extraction step (150) further comprises a step of washing the discharged organic (175) for obtaining recovered organic solvent.

11. The process for recovering material derived from bauxite residue, according to any one of claims 1 to 10, **characterized in that** the pyrohydrolysis step (160) comprises reaction with an oxygen source stream at a certain temperature to decompose aluminum chloride into alumina (161).

12. The process for recovering material derived from bauxite residue, according to any one of claims 1 to 11, **characterized in that** the pyrohydrolysis step (160) further comprises a step of regenerating (162) hydrochloric acid.

13. The process for recovering material derived from bauxite residue, according to any one of claims 1 to 12, **characterized in that** it comprises an exhaust system (180) for capturing and washing gases from the leaching (130) and solvent extraction (150) steps.

14. The process for recovering material derived from bauxite residue, according to any one of claims 1 to 13, **characterized in that** it comprises a step of separating the bauxite residue by size.

15. Material derived from bauxite residue, **characterized in that** it is obtained by the process as defined in any one of claims 1 to 14, the bauxite residue derived material comprising at least one of alumina, titanium dioxide and silica gel.

16. Material derived from bauxite residue according to claim 15, **characterized in that** it comprises at least one of alumina in a concentration between 80 and 99% aluminum, titanium dioxide in a concentration between 60 and 99% and silica gel in concentration of 60 to 90%.
